# EUROPÄISCHE PATENTSCHRIFT

(11) **EP 3 523 617 B1**
(45) Veröffentlichungstag und Bekanntmachung des Hinweises auf die Patenterteilung: **25.11.2020**
(21) Anmeldenummer: 17781048.8
(22) Anmeldetag: 28.09.2017
(51) Int. Cl.: G01M 3/20

(54) **SCHNÜFFELLECKSUCHER MIT ABSTANDSABHÄNGIGER STEUERUNG DES FÖRDERGASSTROMS**
LEAKAGE SNIFFER WITHSNIFFING LEAK DETECTOR COMPRISING A UNIT TO ADUST THE GAS FOW TO THE ANALYSING UNIT DEPENDING ON THE SNIFFER DISTANCE
DÉTECTEUR DE FUITE RENIFLANT COMPRENANT UNE UNITÉ POUR AJUSTER LE DÉBIT DE GAZ À L'UNITÉ D'ANALYSE EN FONCTION DE LA DISTANCE DE RENIFLAGE

(30) Priorität: 06.10.2016 DE 102016219401
(43) Veröffentlichungstag der Anmeldung: 14.08.2019
(73) Patentinhaber: Inficon GmbH, 50968 Köln (DE)
(72) Erfinder: DECKER, Silvio, 50968 Köln (DE)
(74) Vertreter: dompatent von Kreisler Selting Werner - Partnerschaft von Patent- und Rechtsanwälten mbB
(86) Internationale Anmeldenummer: PCT/EP2017/074680
(87) Internationale Veröffentlichungsnummer: WO 2018/065298

(56) Entgegenhaltungen:
- WO-A1-2006/069877
- DE-A1-102007 043 382
- JP-A- 2001 050 852

## Beschreibung

Die Erfindung betrifft eine Vorrichtung und ein Verfahren zur Schnüffellecksuche mit einer Schnüffelsonde.

Die Schnüffelsonde ist über einen Gasströmungsweg mit einer Vakuumpumpe verbunden, die einen gegenüber der Umgebung der Schnüffelsonde reduzierten Gasdruck erzeugt. Dadurch wird Gas aus der Umgebung der Schnüffelsonde durch eine Ansaugöffnung an einer Schnüffelspitze der Schnüffelsonde angesaugt und entlang des Gasströmungsweges zur Vakuumpumpe hin gefördert. Durch die Schnüffelsonde angesaugtes Gas wird mit Hilfe eines Gasanalysators analysiert. Hierbei entsteht ein Fördergasstrom von der Schnüffelspitze zum Gasanalysator. Beispielsweise kann der Gasanalysator den angesaugten Fördergasstrom auf Vorhandensein eines Prüfgases hin untersuchen, mit welchem das Prüfobjekt zuvor befüllt wurde. Dabei wird das Prüfobjekt mit Prüfgas derart befüllt, dass der Gasdruck innerhalb des Prüfobjekts größer ist als derjenige außerhalb des Prüfobjekts, sodass Prüfgas durch ein mögliches Leck in einer Außenwand des Prüfobjekts austritt. Wird nun die Schnüffelsonde entlang der Oberfläche des Prüfobjekts geführt und gelangt dabei in die Nähe des Lecks, wird das aus dem Leck austretende Prüfgas von der Schnüffelsonde angesaugt und von dem Gasanalysator erfasst.

Bei der Schnüffellecksuche muss in der Schnüffelleitung ein Fördergasstrom konstant aufrecht erhalten werden, um aus dem Leck austretendes Prüfgas zum Gasanalysator zu fördern und die aus dem Leck austretende Prüfgasströmung definiert zu erfassen und damit ein quantitatives Maß für die Leckagerate zu erhalten.

Eine Besonderheit besteht darin, dass die Konzentration des Prüfgases in dem mit der Schnüffelsonde angesaugten Fördergasstrom auch bei konstantem Fördergasstrom abnimmt, wenn der Abstand zwischen Schnüffelsonde und Leck zunimmt oder die (transversale) Schnüffelgeschwindigkeit zunimmt. Umgekehrt steigt der Prüfgasanteil in dem angesogenen Gasstrom bei abnehmendem Abstand und geringerer Relativgeschwindigkeit zwischen Schnüffelsonde und Leck. Messungen sind deshalb nur vergleichbar bei jeweils gleichen "Schnüffelparametern": Abstand, Transversalgeschwindigkeit, Fördergasstrom. Wenn alle Schnüffelparameter jederzeit bekannt wären, wäre das Messergebnis unabhängig von Abstand, Geschwindigkeit und Fördergasstrom immer richtig. Insbesondere der Abstand zum Leck ist ein Parameter, der das Finden von Lecks an unbekannten Orten stark erschweren kann, weshalb ein größerer Fördergasstrom bei großen bzw. noch unbekannten Abständen (z.B. zu den verborgenen Lecks) wünschenswert wäre. Bei gut lokalisierten Lecks (geringer Messabstand) ist dagegen ein kleiner Fördergasstrom vorteilhaft, um auch noch sehr kleine Leckageraten messen zu können.

WO 2006/069877 A1 beschreibt ein Lecksuchgerät mit einem Handgerät, dass eine Schnüffelspitze aufweist, an der ein Abstandsdetektor zur Ermittlung eines vorgegebenen Abstands von einem Testobjekt vorgesehen ist.

DE 10 2007 043 382 A1 beschreibt einen Schnüffellecksucher, der in einer Schnüffelsonde eine erste Saugleitung aufweist, die zu einem Hauptgerät führt, und der mit einer größeren zweiten Saugleitung versehen ist, durch die mit einer Gasförderpumpe Gas aus der Schnüffelspitze angesaugt wird.

JP 2001 050852 A beschreibt ein Gasanalysegerät mit geschwindigkeitsabhängiger Messung.

Der Erfindung liegt daher die Aufgabe zugrunde, das Auffinden von unbekannten Lecks und die Nachweisgrenze für Prüfgas bei der Messung von kleinen Leckageraten zu verbessern.

Die erfindungsgemäße Vorrichtung ist definiert durch Anspruch 1. Das erfindungsgemäße Verfahren ist definiert durch Anspruch 7.

Erfindungsgemäß ist ein Abstandssensor vorgesehen, der zum Messen des Abstandes zwischen Abstandssensor und einem Prüfobjekt, entlang dem die Schnüffelsonde geführt wird, ausgebildet ist. Eine Steuerung ist vorgesehen und dazu ausgebildet, den gemessenen Abstand zu erfassen und in Abhängigkeit von dem erfassten Abstand den Fördergasstrom entlang des Gasströmungsweges von der Schnüffelspitze zur Vakuumpumpe hin zu verändern. Dabei sollte für einen größeren Abstand ein größerer Gasfluss eingestellt werden als für einen geringeren Abstand. Solange der Abstand sich nicht ändert, wird der Fördergasstrom konstant gehalten.

Bei dem Abstandssensor kann es sich um einen mechanischen Sensor mit einem Federelement und/oder einem magnetischen Kontakt oder mechanisch betätigtem elektrischen Schalter handeln. Bei Schließen des Kontakts beziehungsweise Schalters wird ein vorgegebener Abstand als erkannt angesehen. Das Signal des Abstandssensors wird vorzugsweise auf elektronischem Weg an die elektronische Steuerung übermittelt. Alternativ kann es sich bei dem Abstandssensor um einen optischen Sensor oder um einen akustischen Sensor (Ultraschallsensor) handeln. Der Sensor kann zum Aussenden und Empfangen elektromagnetischer Wellen (zum Beispiel Radar) ausgebildet sein.

Der Sensor kann ergänzend auch zum Erfassen der Relativgeschwindigkeit gegenüber der Oberfläche des Prüfobjekts, gegenüber dem die Schnüffelsonde geführt und bewegt wird, ausgebildet sein. Alternativ oder ergänzend kann zusätzlich zu dem Abstandssensor ein separater Geschwindigkeitssensor vorgesehen sein. Auch der Geschwindigkeitssensor sollte zum Aussenden und Empfangen elektromagnetischer Wellen (Licht, Funk, Schall) ausgebildet sein. Die Berechnung des Abstandes und/oder der Geschwindigkeit kann von einer Elektronik, zum Beispiel von der Steuerelektronik, auf bekannte Weise beispielsweise unter Anwendung des Dopplerprinzips, erfolgen.

Die Steuerung kann dazu ausgebildet sein, auf die Vakuumpumpe und/oder auf eine entlang des Gasströmungsweges angeordnete mechanisch oder elektrisch betätigbare Drossel zu wirken. Im Falle der Vakuumpumpe kann die Steuerung deren Drehzahl einstellen und verändern. Im Falle der Drossel kann die Steuerung den Flusswiderstand der Drossel einstellen und verändern.

Der Gasanalysator kann dazu ausgebildet sein, das von dem Fördergasstrom geförderte Gas zu analysieren. Alternativ oder ergänzend kann der Gasanalysator dazu ausgebildet sein, das von der Schnüffelsonde angesaugte und über einen zweiten Gasströmungsweg geförderte Gas zu analysieren. Hierzu kann der Gasanalysator entlang des betreffenden Gasströmungswegs angeordnet sein. Im Falle des zweiten Gasströmungsweges kann dieser mit einer zweiten Vakuumpumpe verbunden sein. Die Menge des entlang des zweiten Gasströmungsweges geförderten Gases hängt von dem mit dem ersten Gasströmungsweg abstandsabhängig geförderten Gasfluss zusammen.

Im Folgenden werden anhand der Figuren drei Ausführungsbeispiele der Erfindung näher erläutert. Es zeigen:
- Figur 1: eine schematische Darstellung des ersten Ausführungsbeispiels,
- Figur 2: eine schematische Darstellung des zweiten Ausführungsbeispiels,
- Figur 3: eine schematische Darstellung des dritten Ausführungsbeispiels und
- Figur 4: ein den Zusammenhang zwischen Abstand, Geschwindigkeit und Gasfluss veranschaulichendes Diagramm.

Im Folgenden werden zunächst Gemeinsamkeiten der Ausführungsbeispiele erläutert.

Der Schnüffellecksucher 10 weist eine Schnüffelsonde 12 auf, deren Schnüffelspitze 14 mit einer Ansaugöffnung 16 zum Ansaugen eines Gasstroms versehen ist. Das rückwärtige, der Ansaugöffnung 16 gegenüberliegende Ende der Schnüffelsonde 12, ist über einen ersten Gasströmungsweg 18 mit einer ersten Vakuumpumpe 20 verbunden. Die erste Vakuumpumpe 20 ist dazu ausgebildet, einen gegenüber der Umgebung 22 der Schnüffelsonde 12 reduzierten Gasdruck zu erzeugen. Die Vakuumpumpe 20 ist als Gasförderpumpe ausgebildet und saugt durch die Ansaugöffnung 16 Gas aus der Umgebung 22 an und fördert dieses entlang des ersten Gasströmungsweges 18.

Die Schnüffelsonde 12 ist mit einem Abstandssensor 24 versehen, der an der Schnüffelspitze 14 im Bereich der Ansaugöffnung 16 angeordnet ist. Der Abstandssensor 24 ist dazu ausgebildet, den Abstand 26 gegenüber der Oberfläche 28 eines Prüfobjekts 30 zu erfassen, in dessen Nähe die Schnüffelsonde 12 positioniert wird, um aus einem möglichen Leck 32 austretendes Prüfgas 34 anzusaugen.

Von der Schnüffelsonde 12 durch die Ansaugöffnung 16 angesaugtes Gas wird einem Gasanalysator 36 zugeführt, bei dem es sich beispielsweise um ein Massenspektrometer handeln kann. Der Gasanalysator 36 ist dazu ausgebildet, Prüfgas 34 zu detektieren.

Der von dem Abstandssensor 24 gemessene Abstand 26 wird über eine elektronische Leitung 38 an eine Steuerung 40 übermittelt. Bei der Steuerung 40 kann es sich beispielsweise um einen Mikrocontroller oder um einen Computer handeln. Die Steuerung 40 ist dazu ausgebildet, den entlang des ersten Gasströmungsweges 18 geförderten Gasfluss in Abhängigkeit von dem gemessenen Abstand 26 zu verändern und einzustellen. Dies kann über eine elektrische Leitung 42 auf folgende Arten erfolgen:

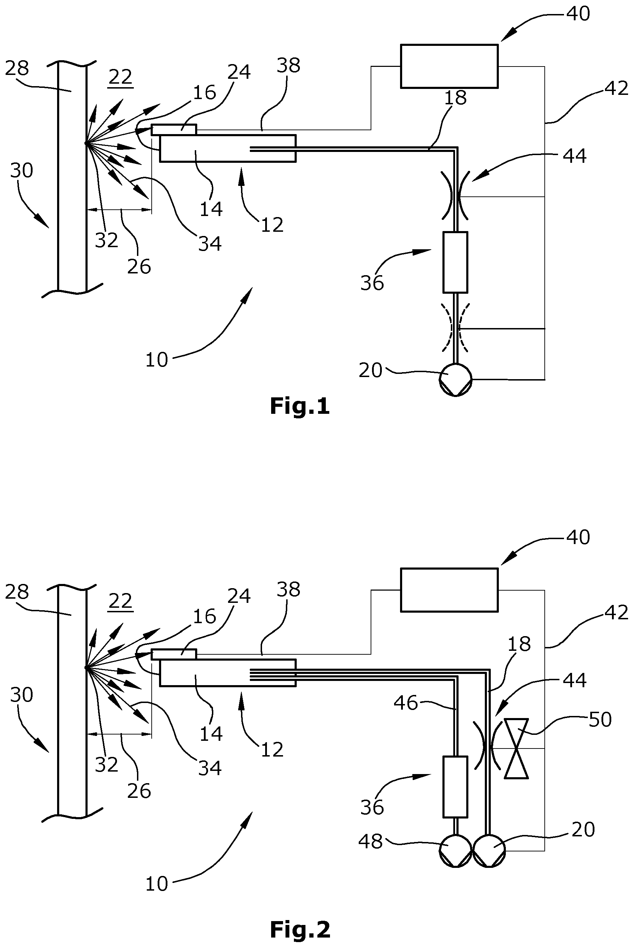

Der Flusswiderstand einer entlang des ersten Gasströmungsweges 18 angeordneten regelbaren Drossel 44 wird von der Steuerung 40 eingestellt beziehungsweise verändert. Wenn, wie in Figur 1 dargestellt, der Gasanalysator 36 entlang des ersten Gasströmungsweges 18 angeordnet ist, kann die Drossel 44 zwischen Schnüffelsonde 12 und Gasanalysator 36 und/oder (wie in Figur 1 gestrichelt dargestellt) zwischen dem Gasanalysator 36 und der Vakuumpumpe 20 angeordnet sein.

Alternativ oder ergänzend kann die Steuerung 40 über die Leitung 42 die Förderleistung der Pumpe 20 einstellen beziehungsweise verändern, zum Beispiel in dem die Steuerung 40 die Drehzahl der Pumpe 20 einstellt.

Im Folgenden werden die Unterschiede zwischen den Ausführungsbeispielen erläutert.

In Figur 1 ist der Gasanalysator 36 entlang des ersten Gasströmungsweges 18 angeordnet.

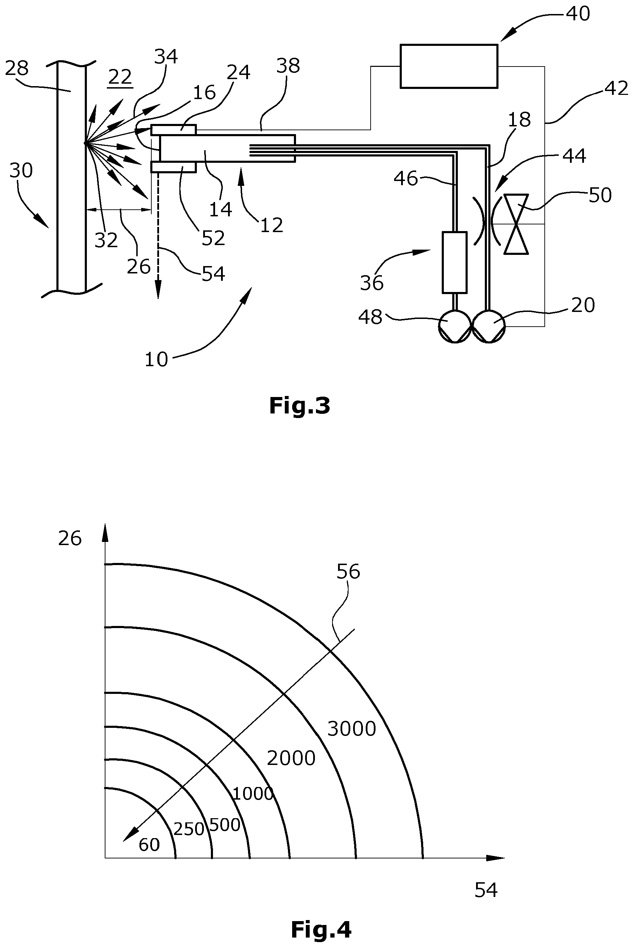

In dem zweiten Ausführungsbeispiel gemäß Figur 2 und in dem dritten Ausführungsbeispiel gemäß Figur 3 ist der Gasanalysator 36 entlang eines zweiten, von dem ersten Gasströmungsweg 18 verschiedenen Gasströmungsweges 46 angeordnet. Der zweite Gasströmungsweg 46 verbindet die Schnüffelsonde 12 mit einer zweiten, von der ersten Vakuumpumpe 20 verschiedenen Vakuumpumpe 48. Dem liegt der Gedanke zugrunde, dass der über die Steuerung 40 eingestellte Fluss entlang des ersten Gasströmungsweges 18 zumindest indirekt auch den entlang des zweiten Gasströmungsweges 46 geförderten Fluss beziehungsweise die entlang des zweiten Gasströmungsweges 46 geförderte Gasmenge beeinflusst.

Bei dem zweiten Ausführungsbeispiel gemäß Figur 2 und bei dem dritten Ausführungsbeispiel gemäß Figur 3 kann die Steuerung 40 über eine der Drossel 44 des ersten Ausführungsbeispiels entsprechende Drossel den Flusswiderstand einstellen beziehungsweise verändern. Alternativ zu der Drossel 44 kann der erste Gasströmungsweg 18 ein Ventil 50 aufweisen, das zur Veranschaulichung in den Figuren 2 und 3 neben der Drossel 44 angeordnet ist und, ähnlich wie die Drossel 44, über die Leitung 42 von der Steuerung 40 betätigt werden kann. Bei geschlossenem Ventil 50 wird kein Gas entlang des ersten Gasströmungsweges 18 gefördert, sodass sämtliches von der Schnüffelsonde angesaugte Gas über den zweiten Gasströmungsweg 46 dem Gasanalysator 36 zugeführt wird. Bei geöffnetem Ventil 50 gelangt nur ein Teil des von der Schnüffelsonde 12 angesaugten Gases über den zweiten Gasströmungsweg 46 zu dem Gasanalysator 36, während ein anderer Teil des angesaugten Gases entlang des ersten Gasströmungsweges 18 geführt wird.

Alternativ oder ergänzend zu der Drossel 44 beziehungsweise dem Ventil 50 kann die Steuerung 40 ähnlich wie bei dem ersten Ausführungsbeispiel auch direkt auf die Förderleistung der ersten Vakuumpumpe 20 einwirken und diese beispielsweise ein- oder ausschalten. Bei ausgeschalteter erster Vakuumpumpe 20 wird ähnlich wie bei geschlossenem Ventil 50 der gesamte von der Schnüffelsonde 12 angesaugte Gasstrom entlang des zweiten Gasströmungsweges 46 dem Gasanalysator 36 zugeführt. Bei eingeschalteter Pumpe 20 wird ähnlich wie bei geöffnetem Ventil 50 ein Teil des angesaugten Gases über den ersten Gasströmungsweg 18 gefördert, während ein anderer Teil über den zweiten Gasströmungsweg 46 dem Gasanalysator 36 zugeführt wird.

Das dritte Ausführungsbeispiel unterscheidet sich von dem zweiten Ausführungsbeispiel durch einen von dem Abstandssensor 24 separaten, ebenfalls an der Schnüffelspitze 14 angeordneten Geschwindigkeitssensor 52, der zum Messen der Relativgeschwindigkeit 54 der Schnüffelspitze 14 gegenüber der Oberfläche 28 ausgebildet ist. Die gemessene Geschwindigkeit wird ebenfalls über eine in Figur 3 nicht dargestellte Leitung der Steuerung 40 zugeführt. Die Steuerung 40 ist dazu ausgebildet, den entlang des ersten Gasströmungsweges 18 geführten Gasfluss auf die oben beschriebenen Weisen einzustellen beziehungsweise zu verändern.

Figur 4 zeigt den Zusammenhang zwischen dem Abstand 26, der Relativgeschwindigkeit 54 und dem einzustellenden Fluss 56 entlang des ersten Gasströmungsweges 18. Je größer der Abstand 26 und/oder je größer die Geschwindigkeit 54 sind, desto geringer ist der Fluss 56 einzustellen, um eine gleiche Menge Prüfgas 34 zu erfassen und die Nachweisgrenze des Prüfgases zum Nachweis eines Lecks 32 unverändert zu belassen.

## Patentansprüche

1. Schnüffellecksucher (10) mit durch einen Gasströmungsweg miteinander verbundener Schnüffelsonde (12) und Vakuumpumpe (20), wobei entlang des Gasströmungsweges (18) ein Gasanalysator (36) zur Analyse des von der Vakuumpumpe (20) durch die Schnüffelsonde (12) angesaugten Gases angeordnet ist, und mit
einem den Abstand zwischen Schnüffelsonde (12) und Prüfobjekt (30) erfassenden Abstandssensor (24) und einer mit dem Abstandssensor (24) verbundenen Steuerung,
**dadurch gekennzeichnet, dass**
die Steuerung dazu ausgebildet ist, in Abhängigkeit von dem gemessenen Abstand den entlang des Gasströmungsweges (18) geförderten Fördergasstrom zu verändern, indem für einen größeren Abstand ein größerer Gasfluss eingestellt wird als für einen geringeren Abstand.

2. Schnüffellecksucher (10) nach Anspruch 1, **dadurch gekennzeichnet, dass** die Steuerung die Förderleistung der Vakuumpumpe (20) beeinflusst.

3. Schnüffellecksucher (10) nach Anspruch 1 oder 2, **dadurch gekennzeichnet, dass** die Steuerung den Flusswiderstand einer in dem Gasströmungsweg (18) angeordneten Drossel beeinflusst.

4. Schnüffellecksucher (10) nach einem der vorhergehenden Ansprüche, **dadurch gekennzeichnet, dass** der Gasanalysator (36) entlang des Gasweges zwischen der Schnüffelsonde (12) und der Vakuumpumpe (20) angeordnet ist.

5. Schnüffellecksucher (10) nach einem der Ansprüche 1 - 3, **dadurch gekennzeichnet, dass** der Gasanalysator (36) in einem zweiten, mit der Schnüffelsonde (12) verbundenen Gasströmungsweg (46) angeordnet ist, dessen Gasstrom nicht durch die Steuerung beeinflusst wird.

6. Schnüffellecksucher (10) nach einem der vorhergehenden Ansprüche, **dadurch gekennzeichnet, dass** ein Geschwindigkeitssensor (52) zur Messung der Relativgeschwindigkeit der Schnüffelsonde (12) gegenüber einem Prüfobjekt (30) vorgesehen ist und dass die Steuerung zum Steuern des Gasstromes in Abhängigkeit von der gemessenen Geschwindigkeit ausgebildet ist.

7. Verfahren zur Schnüffellecksuche mit einem Schnüffellecksucher (10) nach einem der vorhergehenden Ansprüche,
**dadurch gekennzeichnet,**
**dass** der Abstand zwischen dem Abstandssensor (24) und einem auf ein Leck (32) hin zu untersuchenden Prüfobjekt (30) gemessen wird, und
**dass** die Steuerung den entlang des Gasströmungsweges (18) geführten und durch die Schnüffelsonde (12) angesaugten Fördergasstrom in Abhängigkeit von dem gemessenen Abstand einstellt und dass der gemessene Abstand über einen vorgegebenen Zeitraum überwacht wird und bei steigendem Abstand der Gasstrom erhöht wird und bei sinkendem Abstand der Gasfluss reduziert wird.

8. Verfahren nach Anspruch 7, **dadurch gekennzeichnet, dass** die Menge des erfassten Prüfgases unter Berücksichtigung des gemessenen Abstandes und/oder unter Berücksichtigung des eingestellten Fördergasstromes angezeigt wird.

## Claims

1. A sniffer leak detector (10) with a sniffer probe (12) and a vacuum pump (20) connected to each other via a gas flow path, wherein a gas analyzer (36) is arranged along the gas flow path (18) for analyzing the gas drawn in by the vacuum pump (20) via the sniffer probe (12), and with
a distance sensor (24) detecting the distance between the sniffer probe (12) and a test object (30), and a control connected to the distance sensor (24),
**characterized in that**
the control is configured to vary the carrier gas flow conveyed along the gas flow path (18) in dependence on the distance measured by setting a greater gas flow for a greater distance than for a smaller distance.

2. The sniffer leak detector (10) according to claim 1, **characterized in that** the control influences the flow rate of the vacuum pump (20).

3. The sniffer leak detector (10) according to claim 1 or 2, **characterized in that** the control influences the flow resistance of a throttle arranged in the gas flow path (18).

4. The sniffer leak detector (10) according to one of the preceding claims, **characterized in that** the gas analyzer (36) is arranged along the gas flow path between the sniffer probe (12) and the vacuum pump (20).

5. The sniffer leak detector (10) according to one of claims 1-3, **characterized in that** the gas analyzer (36) is arranged in a second gas flow path (46) connected to the sniffer probe (12), wherein the gas flow of said gas flow path is not influenced by the control.

6. The sniffer leak detector (10) according to one of the preceding claims, **characterized in that** a speed sensor (52) is provided for measuring the relative speed of the sniffer probe (12) with respect to the test object (30), and that the control is configured to control the gas flow in dependence on the speed measured.

7. A method for sniffer leak detection with a sniffer leak detector (10) according to one of the preceding claims,
**characterized in that**
the distance between the distance sensor (24) and a test object (30) to be checked for a leak (32) is measured, and
that the carrier gas flow, which is guided along the gas flow path (18) and drawn in by the sniffer probe (12), is adjusted by the control in dependence on the distance measured, and that the distance measured is monitored for a predefined period, the gas flow being increased if the distance increases and being decreased if the distance decreases.

8. The method according to claim 7, **characterized in that** the amount of test gas detected is displayed taking into account the distance measured and/or taking into account the adjusted carrier gas flow.

## Revendications

1. Détecteur de fuite à reniflement (10) doté d'une pompe à vide (20) et d'une sonde de reniflement (12) reliées l'une à l'autre à travers une voie d'écoulement de gaz, dans lequel un analyseur de gaz (36) est disposé le long de la voie d'écoulement de gaz (18) afin d'analyser le gaz aspiré par la pompe à vide (20) à travers la sonde de reniflement, et doté
d'un capteur de distance (24) saisissant la distance entre la sonde de reniflement (12) et l'objet de test (30) et d'une commande reliée au capteur de distance (24),
**caractérisé en ce que**
la commande est réalisée de façon à modifier le flux de gaz vecteur transporté le long de la voie d'écoulement de gaz (18) en fonction de la distance mesurée, un débit de gaz plus élevé étant réglé pour une distance plus élevée que pour une distance plus faible.

2. Détecteur de fuite à reniflement (10) selon la revendication 1, **caractérisé en ce que** la commande influe sur la capacité de transport de la pompe à vide (20).

3. Détecteur de fuite à reniflement (10) selon la revendication 1 ou 2, **caractérisé en ce que** la commande influe sur la résistance à l'écoulement d'un étranglement disposé dans la voie d'écoulement de gaz (18).

4. Détecteur de fuite à reniflement (10) selon l'une des revendications précédentes, **caractérisé en ce que** l'analyseur de gaz (36) est disposé le long de la voie de gaz entre la sonde de reniflement (12) et la pompe à vide (20) .

5. Détecteur de fuite à reniflement (10) selon l'une des revendications 1-3, **caractérisé en ce que** l'analyseur de gaz (36) est disposé dans une deuxième voie d'écoulement de gaz (46) reliée à la sonde de reniflement (12), dont le flux de gaz n'est pas influencé à travers la commande.

6. Détecteur de fuite à reniflement (10) selon l'une des revendications précédentes, **caractérisé en ce qu'**un capteur de vitesse (52) destiné à mesurer la vitesse relative de la sonde de reniflement (12) par rapport à un objet de test (30) est prévu et **en ce que** la commande est réalisée afin de commander le flux de gaz en fonction de la vitesse mesurée.

7. Procédé de détection de fuite par reniflement avec un détecteur de fuite à reniflement (10) selon l'une des revendications précédentes,
**caractérisé en ce que**
la distance entre le capteur de distance (24) et un objet de test (30) sur lequel la présence d'une fuite doit être déterminée est mesurée, et **en ce que**
la commande règle le flux de gaz vecteur aspiré à travers la sonde de reniflement (12) et guidé le long de la voie d'écoulement de gaz (18) en fonction de la distance mesurée et **en ce que** la distance mesurée est surveillée sur une durée prédéfinie et le flux de gaz augmente lorsque la distance s'accroît et le débit de gaz est réduit lorsque la distance diminue.

8. Procédé selon la revendication 7, **caractérisé en ce que** la quantité de gaz de contrôle recueilli est affichée en tenant compte de la distance mesurée et/ou en tenant compte du flux de gaz vecteur réglé.
